# EUROPÄISCHE PATENTANMELDUNG

(11) **EP 2 584 300 A1**
(43) Veröffentlichungstag der Anmeldung: **24.04.2013**
(21) Anmeldenummer: 12006420.9
(22) Anmeldetag: 13.09.2012
(51) Int. Cl.: F28C 1/00, F28B 1/06, F28B 9/08, F28F 25/02, F28F 27/00, F01K 27/00, F28F 25/04, F28F 25/00

(54) **Kühlvorrichtung für ein Dampfturbinenkraftwerk**

(30) Priorität: 18.10.2011 DE 102011116078
(71) Anmelder: RWE Technology GmbH, 45128 Essen (DE)
(72) Erfinder: Thiele, Frank, 45721 Haltern am See (DE); Staubert, Mark, 45359 Essen (DE); Heinen, Martin, 41189 Mönchengladbach (DE); Brauer, Frank, 44577 Castrop-Rauxel (DE)
(74) Vertreter: Polypatent

(57) **Zusammenfassung**

Die Erfindung betrifft unter anderem eine Kühlvorrichtung für ein Dampfturbinenkraftwerk mit wenigstens einer Einrichtung zum Ableiten von Kondensat oder Kühlwasser unter Schwerkrafteinwirkung, mit wenigstens einer Sammeleinrichtung für Kondensat und/oder Kühlwasser, wobei die Sammeleinrichtung als Rotationsbehälter ausgebildet ist oder der Sammeleinrichtung ein Rotationsbehälter in Form eines Rotationsbeckens (6) oder eines Tos-Rohrs (17) in Schwerkraftrichtung nachgeschaltet ist, derart, dass in dem Rotationsbehälter bei ablaufenden Kondensat oder Kühlwasser Gravitationswasserwirbel entstehen, wobei innerhalb des Rotationsbehälters oder in einem Ablauf des Rotationsbehälters wenigstens eine Wasserturbine angeordnet ist, mit welcher die Rotationsenergie des Kondensats oder des Kühlwasser in elektrische Energie umgesetzt wird.

## Beschreibung

Die Erfindung betrifft eine Kühlvorrichtung für ein Dampfturbinenkraftwerk, beispielsweise in Form eines Nasskühlturms oder eines Luftkondensators. Die Erfindung ist ebenso anwendbar für andere Kühlvorrichtungen wie Hybrid- und Trockenkühltürme.

Die Erfindung betrifft weiterhin ein Verfahren zur Kühlung von Kondensat oder Kühlwasser eines Dampfturbinenprozesses unter Verwendung einer Kühlvorrichtung in Form eines Nasskühlturms oder eines Luftkondensators.

In Wasser-Dampfkreisläufen von Dampfturbinenprozessen wird normalerweise der Abdampf aus der Dampfturbine mithilfe eines Kondensators rückkondensiert, wobei die Rückkondensation beispielsweise mittels eines Luftkondensators betrieben werden kann. Häufig werden allerdings Kondensatoren mit Wasser als Kühlmedium betrieben, wobei das Kühlwasser in Kühltürmen gekühlt wird. Solche Kühltürme sind häufig als sogenannte Nasskühltürme ausgebildet. In diesen wird das Kühlwasser unter teilweise Verdünstung verrieselt und entweder im Kreislauf zum Kondensator zurückgeführt oder in ein Oberflächengewässer eingeleitet.

Beim Betrieb von Kühltürmen entstehen je nach Wetterlage unter Umständen erhebliche Mengen an Kühlturmschwaden. Darüber hinaus kann bei Einleitung von verrieseltem Kühlwasser aus einem Rückkühler in ein Oberflächengewässer das Temperaturprofil des Oberflächengewässers negativ beeinflusst werden, wenn die Verweilzeit des Kühlwassers im Rückkühler oder in der Kühlturmtasse oder in einem der Kühlturmtasse nachgeschalteten Tosbecken nicht hinreichend groß ist.

Insbesondere das bei Kühltürmen verrieselte Kühlwasser beinhaltet erhebliche Mengen an potentieller Energie, die bei konventionellen Anlagen im Wesentlichen ungenutzt bleibt.

Aus der DE 10 2007 036 343 B4 ist ein Verfahren zum Betreiben einer Kühlvorrichtung für Dampfkraftwerke mit einem Nasskühlturm bekannt, bei dem das Kühlwasser einem Steigeschacht zugeführt wird, mit vom Steigeschacht gespeisten Verteilkanälen zur Verrieselung des Kühlwassers, mit Absperrorganen für die Verteilkanäle und mit einem Überfallschacht zur Aufnahme überschüssigen Kühlwassers, wobei im Wasseraustritt des Kühlturm-Steigeschachts permanent der Kraftschluss des Kühlwassers stattfindet und der Überfallschacht so ausgeführt ist, dass er den gesamten Kühlwasserstrom ableiten kann, wobei bei geschlossenen Verteilkanälen der gesamte Kühlwasserstrom durch den Überfallschacht strömt.

Zur Nutzung der potentiellen Energie des Kühlwassers wird in der DE 10 2007 036 343 B4 vorgeschlagen, im Überfallschacht oder in einer Kühlwasserableitung wenigstens eine Wasserturbine anzuordnen, mit welcher Energie aus dem Kühlwasser zurückgewonnen werden kann. Die Konstruktion ist so ausgeführt, dass Kühlwasser im Durchlaufbetrieb geführt werden kann, ohne dass ein separates Kraftschlussbecken benötigt wird.

Eine Energierückgewinnung mit der Wasserturbine erfolgt in der Regel nur beim Durchlaufbetrieb. Die Konstruktion ist allerdings so ausgelegt, dass auch beim Kühlturmbetrieb eine Energierückgewinnung stattfinden kann, dann ist es allerdings erforderlich, eine Wasserturbine in einem Kaltwasserkanal anzuordnen der deutlich unterhalb des Kühlturmbeckens beziehungsweise der Kühlturmtasse angeordnet ist, was konstruktiv verhältnismäßig aufwendig ist. Das Konzept ist darüber hinaus nur im Zusammenhang mit einer besonderen Anordnung von Staubbecken und Überfallschächten realisierbar.

Der Erfindung liegt daher die Aufgabe zugrunde, eine Kühlvorrichtung für ein Dampfturbinenkraftwerk mit wenigstens einer Einrichtung zum Ableiten von Kondensat und/oder Kühlwasser hinsichtlich der Nutzung der potentiellen Energie der Kondensats oder des Kühlwassers zu verbessern, insbesondere eine solche Anordnung bereitzustellen, die konstruktiv einfacher umsetzbar ist.

Darüber hinaus liegt der Erfindung die Aufgabe zugrunde, ein entsprechendes Verfahren zur Rückgewinnung von potentieller Energie des Kühlwassers bereitzustellen.

Die Aufgabe wird zunächst gelöst durch eine Kühlvorrichtung für ein Dampfturbinenkraftwerk mit wenigstens einer Einrichtung zum Ableiten von Kondensat oder Kühlwasser unter Schwerkrafteinwirkung, mit wenigstens einer Sammeleinrichtung für Kondensat und/oder Kühlwasser, wobei die Sammeleinrichtung als Rotationsbehälter ausgebildet ist oder der Sammeleinrichtung ein Rotationsbehälter in Form eines Tos-Rohrs oder eines Rotationsbeckens in Schwerkraftrichtung nachgeschaltet ist, derart, dass in dem Rotationsbehälter bei ablaufenden Kondensat oder Kühlwasser wenigstens Gravitationswasserwirbel, erzeugt wird und wobei innerhalb des Rotationsbehälters oder in einem Ablauf des Rotationsbehälters wenigstens eine Wasserturbine angeordnet ist, mit welcher die Rotationsenergie des Kondensats oder Kühlwassers in elektrische Energie umgesetzt wird.

Die Kühlvorrichtung gemäß der Erfindung hat insbesondere bei einer Energierückgewinnung aus dem Kondensat den Vorzug, dass aufgrund des Aufzwingens einer Rotationsströmung/tangentialen Strömung auf das Kondensat eine verbesserte Entgasung des Kondensats bewirkt wird.

Durch die Rotation wird die Verweilzeit des Wassers in der Sammeleinrichtung erhöht, so dass eine bessere Abkühlung erzielt wird.

Dieser Effekt macht sich insbesondere bemerkbar, wenn in einem offenen Kühlwasserkreislauf dem Kühlwasser eine entsprechende Tangentialströmung aufgezwungen wird. Bei dem offenen Kühlwasserkreislauf findet eine Begasung statt, die über Diffusionsprozesse zum weiteren Abkühlen des Wassers beiträgt.

Ein weiterer Vorzug der Kühlvorrichtung gemäß der Erfindung ist, dass Wasserwirbelturbinen verwendbar sind, die mit niedrigen Drehzahlen und hohen Drehmomenten betreibbar sind. Über einen verhältnismäßig geringen geodätischen Höhenunterschied lässt sich ein verhältnismäßig großes Rotationsmoment erzeugen. Dadurch sind Einsparungen an Bauhöhe für die Kühlvorrichtung möglich.

Unter Rotationsbehälter im Sinne der Erfindung kann sowohl ein offenes Rotationsbecken sowie ein Tos-Rohr mit einer etwa tangentialen Strömungsführung zu verstehen sein. Der Rotationsbehälter gemäß der Erfindung wird zweckmäßigerweise tangential angeströmt, so dass sich in diesem ein Gravitationswirbel ausbildet, der etwa in der Symmetrieachse des Rotationsbehälters einen kegelförmigen Strudel bildet.

Eine vorteilhafte Ausgestaltung der Kühlvorrichtung gemäß der Erfindung ist eine Ausführung als Nasskühlturm mit wenigstens einem unterhalb von Verrieselungseinbauten vorgesehenen Rotationsbehälter und einer zugehörigen Wasserturbine. Durch die Anordnung eines oder mehrerer Rotationsbehälter unmittelbar unterhalb der Verrieselungsebene des Kühlturms kann nahezu die vollständige geodätische Höhe von den Verrieselungseinbauten bis zu der Kühlturmtasse und darüber hinaus bis zum Einlauf in den Kondensator zur Rückgewinnung von potentieller Energie des Wassers genutzt werden. Insbesondere sind zusätzlich bauliche Maßnahmen an der Kühlturmtasse und dem Zu- und Ablaufwerk nicht erforderlich, so dass bestehende Kühltürme entsprechend leicht nachgerüstet werden können.

Alternativ kann vorgesehen sein, dass der Nasskühlturm eine Kühlturmtasse aufweist, die insgesamt als Rotationsbehälter beziehungsweise als Rotationsbecken ausgebildet ist.

Eine Wasserwirbelturbine kann im Zentrum des Rotationsbeckens oder in einem Auslauf des Rotationsbeckens angeordnet sein. Beispielsweise kann diese einen sich in etwa vertikal erstreckenden Läufer/Rotor mit etwa radialer Beschaufelung aufweisen, welcher tangential durch den in dem Rotationsbecken sich einstellenden Gravitationswasserwirbel angeströmt wird. Eine etwa zylinderförmige Turbine, die im Zentrum des Rotationsbeckens angeordnet ist, benötigt somit nur eine verhältnismäßig geringe von der Flüssigkeit zu überbrückende Höhendifferenz um mit verhältnismäßig hohem Drehmoment betrieben werden zu können.

Bei einer zweckmäßigen und vorteilhaften Ausgestaltung der Kühlvorrichtung gemäß der Erfindung ist vorgesehen, dass unterhalb der Verrieselungseinbauten mehrere, vorzugsweise kaskadenartig angeordnete Sammeleinrichtungen vorgesehen sind, die einen oder mehrere Rotationsbehälter speisen. Diese Konstruktion ist einfach baulich nachrüstbar und erfordert keine aufwendigen konstruktiven Veränderungen bekannter Kühlvorrichtungen.

Als Sammeleinrichtungen können beispielsweise Trichter vorgesehen sein, die etwa von der Symmetrieachse des Kühlturms in Richtung radial nach außen auf unterschiedlichen Niveaus treppenförmig fallend angeordnet sind. So lässt sich auf geringster Grundfläche/Projektionsfläche des Kühlturms die gesamte verrieselte Wassermenge auffangen und deren potentielle Energie vollständig nutzen.

Zweckmäßigerweise speisen jeweils mehrere Trichter einen Rotationsbehälter. Bei einer zweckmäßigen Ausgestaltung der Kühlvorrichtung gemäß der Erfindung ist vorgesehen, dass wenigstens ein Rotationsbehälter einem Kühlwassersammelbehälter auf dem Niveau der Kühlturmtasse oder unterhalb dieses Niveaus nachgeschaltet ist. Beispielsweise kann auf dem Niveau oder unterhalb des Niveaus der Kühlturmtasse ein Staubecken/Kraftschlussbecken vorgesehen sein, welches tangential ein Rotationsbecken speist.

Eine andere Kühlvorrichtung gemäß der Erfindung ist als Luftkondensator ausgebildet, wobei sich diese Kühlvorrichtung dadurch auszeichnet, dass wenigstens ein Rotationsbehälter und wenigstens eine Wasserturbine einem Kondensat-Sammelbehälter vorgeschaltet sind.

In diesem Fall kann beispielsweise der Rotationsbehälter als in den Kondensat-Sammelbehälter mündendes Tos-Rohr ausgebildet sein, welches beispielsweise mit entsprechenden Strömungseinbauten zur Erzwingung einer tangential Strömung/Wirbelströmung versehen ist.

Die der Erfindung zugrunde liegende Aufgabe wird weiterhin gelöst durch ein Verfahren zur Kühlung von Kondensat oder Kühlwasser eines

Dampfturbinenprozesses unter Verwendung einer Kühlvorrichtung in Form eines Nasskühlturms oder eines Luftkondensators, bei welchem Kondensat oder Kühlflüssigkeit unter Ausnutzung eines geodätischen Höhenunterschieds einer Wirbelströmung aufgegeben wird und die Wirbelströmung unter Verwendung wenigstens einer Wasserwirbelturbine, vorzugsweise mit im Wesentlichen vertikal angeordnetem Laufrad in elektrischen Strom umgesetzt wird.

Die Erzeugung eines Gravitationswirbels beziehungsweise die Erzeugung einer Rotationsströmung in einem Rotationsbecken hat physikalisch den Effekt, dass sich wärmeres und leichteres Wasser in der Strömung radial außen anreichert, dass kalte und dichtere Wasser hingegen sich nahe des Zentrums des Gravitationswasserwirbels anreichert und damit schneller abgeführt wird, wodurch sich ein günstigeres Temperaturprofil und eine höhere Verweilzeit für wärmeres Kondensat oder wärmeres Kühlwasser ergibt.

Die Erfindung wird nachstehend anhand zweier in den Zeichnungen dargestellter Ausführungsbeispiele erläutert:

Es zeigen:
- Fig. 1: eine schematische Ansicht eines Nasskühlturms gemäß der Erfindung,
- Fig. 2: einen Schnitt entlang der Linien II-II in Fig. 1,
- Fig.3: eine Detailansicht zweier unterhalb der Verrieselungsebene des Nasskühlturms angeordneter Trichter, an die ein Rotationsbecken angeschlossen sind,
- Fig. 4: eine Draufsicht der Darstellung in Fig. 3
- Fig. 5: eine Ansicht eines Luftkondensators mit einer Kondensat-Sammeleinrichtung gemäß der Erfindung,
- Fig. 6: eine schematische Ansicht eines oberhalb des Kondensat-Sammelbehälters des Luftkondensators angeordneten Tos-Rohrs
- Fig. 7: eine Draufsicht auf die Anordnung in Fig. 6.

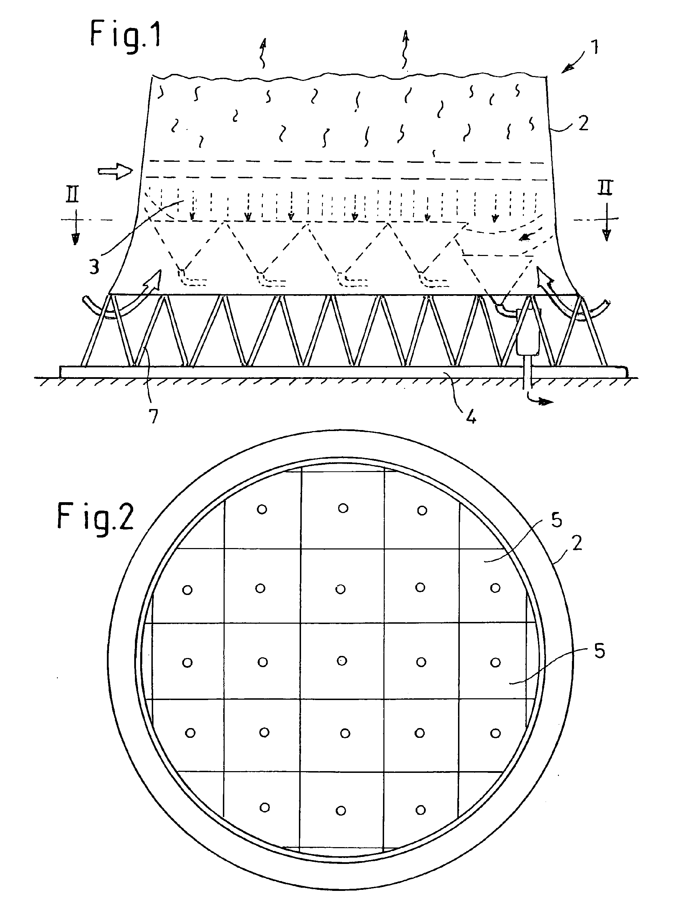

Eine Kühlvorrichtung für ein Dampfturbinenkraftwerk nach einem ersten Ausführungsbeispiel der Erfindung ist in den Figuren 1-4 dargestellt. Die Kühlvorrichtung ist als an und für sich bekannter Nasskühlturm 1 ausgebildet. Der Nasskühlturm 1 ist in bekannter Art und Weise mit einer aufgeständerten Kühlturmschale 2 in Form eines zweischaligen Rotationshyperboloids ausgebildet. Dieser umfasst Rieseleinbauten 3, die nur schematisch dargestellt sind. Oberhalb der Rieseleinbauten 3 sind Mittel zur Verdüsung des Kühlwassers vorgesehen. Das Kühlwasser wird im Gegenstrom zu einem Umgebungsluftstrom verrieselt, welcher zwischen einer Kühlturmtasse 4 und der Schale 2 durch den Nasskühlturm 1 aufsteigt. Der Nasskühlturm 1 nach dem beschriebenen Ausführungsbeispiel ist als Naturzugkühlturm ausgebildet, das heißt die Durchströmung mit Umgebungsluft erfolgt im Wesentlichen ohne Gebläseunterstützung.

Unterhalb der Rieseleinbauten 3 sind eine Vielzahl von Trichtern 5 angeordnet, die das verrieselte Kühlwasser auffangen und jeweils tangential in ein Rotationsbecken 6 einleiten. Hierzu sind auf dem Boden der Kühlturmtasse 4 mehrere Rotationsbecken 6 aufgestellt, die jeweils von mehreren Trichtern 5 mit Kühlwasser gespeist werden. Wie dies beispielsweise der in Figur 2 dargestellten Ansicht zu entnehmen ist, können die Trichter 5 flächendeckend unterhalb den Rieseleinbauten 3 dicht aneinander angeordnet sein. Alternativ können die Trichter 5 auch einander überlappend kaskadenartig angeordnet sein.

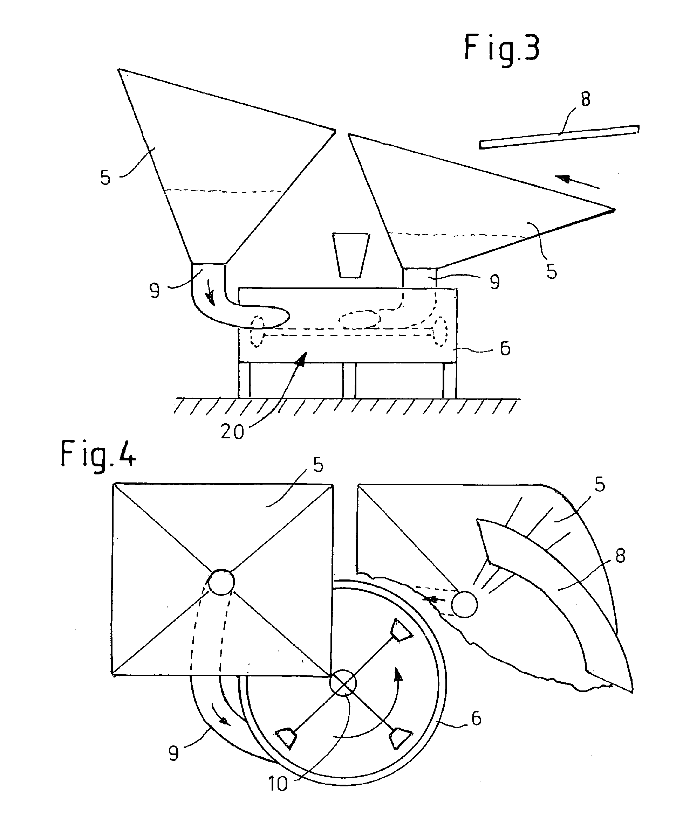

Hierzu ist es sinnvoll, wenn die Trichter 5, wie dies in Figur 4 andeutungsweise dargestellt ist, von der Rotationsachse des Nasskühlturms 1 aus betrachtet zum Rand hin auf verschiedenen Höhenniveaus, das heißt abfallend angeordnet sind. Da die Trichter 5 grundsätzlich ein Strömungshindernis für den Naturzug des Nasskühlturms 1 darstellen, sind zumindest die randseitig der Kühlturmtasse 4 angeordneten Trichter 5 zumindest teilweise mit einem Leitblech 8 so abgedeckt und/oder verkleidet, dass der Umgebungsluftzug in das Innere des Nasskühlturms 1 durch das Ständerwerk 7 hindurch geführt wird.

Durch die gestufte Anordnung der Trichter 5, begleitet mit Leitblechen 8, die auch zum Wasserauffangen dienen, kann die einströmende Luft strömungsgünstig in die Rieselflächen umgeleitet werden. Diese Strömungsführung optimiert die Beaufschlagung der Rieselflächen und reduziert die Strömungsverluste.

Jeder der Trichter 5 ist mit einem Auslauf 9 versehen, der tangential an ein Rotationsbecken 6 angeschlossen ist, in welchem jeweils ein sich etwa vertikal erstreckendes Laufrad 10 einer Wasserwirbelturbine 20 angeordnet ist. Das Laufrad 10 ist mit sich radial erstreckenden Schaufeln 11 versehen, die von einem sich in dem Rotationsbecken 6 einstellenden Gravitationswasserwirbel getrieben werden und den nicht dargestellten Läufer eines Generators antreiben.

Das Laufrad 10 der Wasserwirbelturbine 20 ist längsmittig innerhalb des Rotationsbeckens 6 angeordnet. Der nutzbare geodätische Höhenunterschied zur Erzeugung des Gravitationswirbels ergibt sich von der Oberkante des Flüssigkeitsspiegels in einem Trichter 5 bis etwa zur Oberkante des Flüssigkeitsspiegels in dem Rotationsbecken 6.

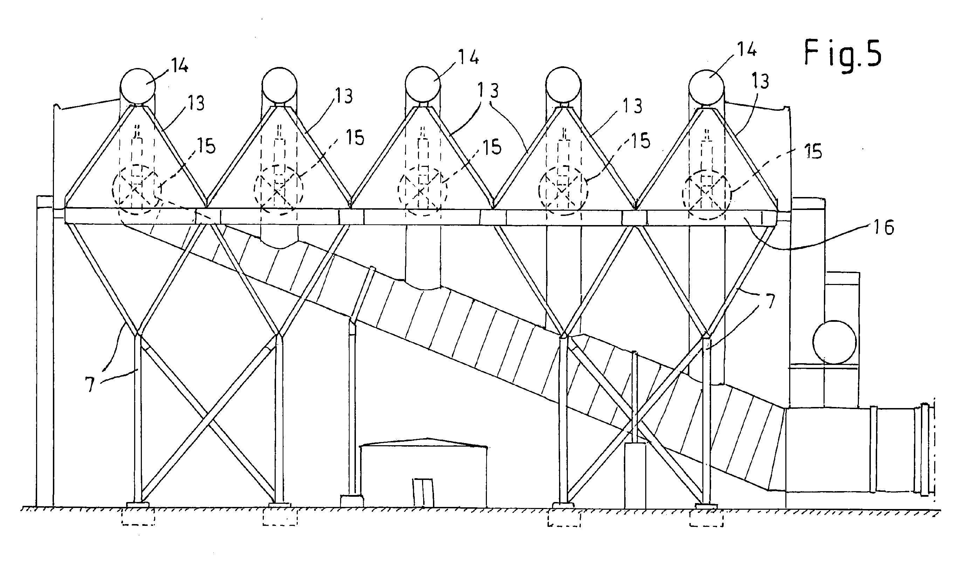

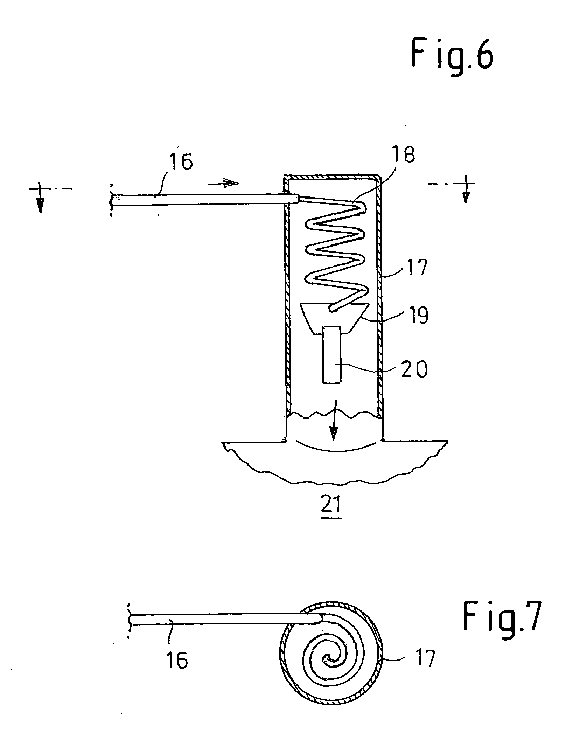

Eine weitere Variante der Kühlvorrichtung gemäß der Erfindung ist in Figur 5 dargestellt. Die Kühlvorrichtung gemäß diesem Ausführungsbeispiel ist als an und für sich bekannter Luftkondensator 12 ausgebildet. Der Luftkondensator 12 umfasst dachförmig aufgeständerte Kühlrohre 13, die sich jeweils beiderseits einer Abdampfleitung 14 in einem spitzen Winkel zueinander abwärts erstrecken und so eine Art Giebeldachstruktur bilden. Die Kühlrohre 13 sind wiederum auf einem Ständerwerk 7 aufgeständert und von unten mittels Ventilatoren 15 zwangsbelüftet. Der Abdampf wird über die Abdampfleitung 14 auf die Kühlrohre 13 verteilt, in welchen sich in Folge dessen Kondensat bildet, welches durch Schwerkraft in den Rohrbündeln zu einer Sammelleitung 16 geführt wird. Über die Sammelleitung 16 gelangt das Kondensat in ein als Rotationsbehälter ausgebildetes Tos-Rohr 17, in welches die Sammelleitung 16 tangential mündet. In dem Tos-Rohr 17 sind wendelförmige Strömungseinbauten 18 vorgesehen, unterhalb derer ein Einlauftrichter 19 für eine Wasserwirbelturbine 20 angeordnet ist. Wie bei dem zuvor beschriebenen Ausführungsbeispiel kann die Wasserwirbelturbine 20 ein im Wesentlichen zylindrischen, vertikal angeordneten Läufer mit sich radial erstreckenden Schaufeln aufweisen. Innerhalb des Tos-Rohrs 17 wird eine tangentiale Strömung erzeugt, die über die zur Verfügung stehende geodätische Höhe von der Sammelleitung 16 mit bis zum Niveau des Einlaufstrichters 19 innerhalb des Tos-Rohrs 17 die potentielle Energie des Wassers in eine Rotationsströmung beziehungsweise in einen Gravitationswirbel umsetzt, der die Wasserwirbelturbine 20 treibt. Auslaufsseitig ist die Wasserwirbelturbine 20 beziehungsweise ist das Tos-Rohr 17 an einem liegenden Kondensatsammelbehälter 21 angeschlossen, der in Figur 6 nur andeutungsweise dargestellt ist. Das Tos-Rohr kann in den Kondensatsammelbehälter integriert sein. Der Kondensatsammelbehälter kann in dem Fall stehend angeordnet werden. Die stehende Konstruktion ist statisch günstiger und spart Anlagenfläche. Die Bereitstellung großer Entgasungsoberflächen des Kondensats erfolgt im Filmablauf im Tos-Rohr.

### Bezugszeichenliste

- 1: Nasskühlturm
- 2: Schale
- 3: Rieseleinbauten
- 4: Kühlturmtasse
- 5: Trichter
- 6: Rotationsbecken
- 7: Ständerwerk
- 8: Leitbleche
- 9: Auslauf
- 10: Laufrad
- 11: Schaufeln
- 12: Luftkondensator
- 13: Kühlrohre
- 14: Abdampfleitung
- 15: Ventilatoren
- 16: Sammelleitung
- 17: Tos-Rohr
- 18: Strömungseinbauten
- 19: Einlauftrichter
- 20: Wasserwirbelturbine
- 21: Kondensat-Sammelbehälter

## Patentansprüche

1. Kühlvorrichtung für ein Dampfturbinenkraftwerk mit wenigstens einer Einrichtung zum Ableiten von Kondensat oder Kühlwasser unter Schwerkrafteinwirkung, mit wenigstens einer Sammeleinrichtung für Kondensat und/oder Kühlwasser, wobei die Sammeleinrichtung als Rotationsbehälter ausgebildet ist oder der Sammeleinrichtung ein Rotationsbehälter in Form eines Tos-Rohrs (17) oder eines Rotationsbeckens (6) in Schwerkraftrichtung nachgeschaltet ist, derart, dass in dem Rotationsbehälter bei ablaufendem Kondensat oder Kühlwasser ein Gravitationswasserwirbel entsteht und wobei innerhalb des Rotationsbehälters oder in einem Ablauf des Rotationsbehälters wenigstens eine Wasserwirbelturbine 20 angeordnet ist, mit welcher die Rotationsenergie des Kondensats oder des Kühlwassers in elektrische Energie umgesetzt wird.

2. Kühlvorrichtung nach Anspruch 1 als Nasskühlturm (1) mit wenigstens einem unterhalb von Verrieselungseinbauten vorgesehenen Rotationsbehälter (6) und einer zugehörigen Wasserwirbelturbine.

3. Kühlvorrichtung nach Anspruch 2,
**dadurch gekennzeichnet, dass**
der Nasskühlturm (1) eine Kühlturmtasse (4) aufweist, die als Rotationsbehälter ausgebildet ist.

4. Kühlvorrichtung nach Anspruch 2,
**dadurch gekennzeichnet, dass**
unterhalb der Verrieselungseinbauten mehrere, vorzugsweise kaskadenartig angeordnete Sammeleinrichtungen vorgesehen sind, die einen oder mehrere Rotationsbehälter (6) speisen.

5. Kühlvorrichtung nach einem der Ansprüche 2 bis 4,
**dadurch gekennzeichnet, dass**
die Sammeleinrichtungen mit wenigstens einem Luftleitblech verkleidet oder teilweise abgedeckt sind.

6. Kühlvorrichtung nach einem der Ansprüche 4 oder 5,
**dadurch gekennzeichnet, dass**
als Sammeleinrichtungen Trichter (5) vorgesehen sind, die etwa von der Symmetrieachse des Nasskühlturms (1) in Richtung radial nach außen auf unterschiedlichen Niveaus treppenförmig fallend angeordnet sind.

7. Kühlvorrichtung nach Anspruch 6,
**dadurch gekennzeichnet, dass**
mehrere Trichter (5) einen Rotationsbehälter speisen.

8. Kühlvorrichtung nach Anspruch 2,
**dadurch gekennzeichnet, dass**
wenigstens ein Rotationsbehälter einem Kühlwasser-Sammelbehälter auf dem Niveau der Kühlturmtasse (4) oder unterhalb dieses Niveaus nachgeschaltet ist.

9. Kühlvorrichtung nach Anspruch 1 als Luftkondensator (12),
**dadurch gekennzeichnet, dass**
wenigstens ein Rotationsbehälter und wenigstens eine Wasserwirbelturbine (20) einem Kondensat-Sammelbehälter (21) vorgeschaltet sind.

10. Kühlvorrichtung nach einem der Ansprüche 1 bis 9,
**dadurch gekennzeichnet, dass**
der Rotationsbehälter als Tos-Rohr (17) ausgebildet ist.

11. Kühlvorrichtung nach Anspruch 10, **dadurch gekennzeichnet, dass** das Tos-Rohr (17) in den Kondensat-Sammelbehälter (21) integriert ist.

12. Verfahren zur Kühlung von Kondensat oder Kühlwasser eines Dampfturbinenprozesses unter Verwendung einer Kühlvorrichtung in Form eines Nasskühlturms oder eines Luftkondensators, bei welchem Kondensat oder Kühlflüssigkeit unter Ausnutzung eines geodätischen Höhenunterschiedes eine Wirbelströmung aufgegeben wird und die Wirbelströmung unter Verwendung wenigstens einer Wasserwirbelturbine vorzugsweise mit im Wesentlichen vertikal angeordnetem Laufrad in elektrischen Strom umgesetzt wird.
